# EUROPEAN PATENT SPECIFICATION

(11) **EP 2 792 583 B1**
(45) Date of publication and mention of the grant of the patent: **05.08.2015**
(21) Application number: 13185252.7
(22) Date of filing: 20.09.2013
(51) Int. Cl.: B62J 6/02, B62J 17/02, B60Q 1/00

(54) **Motorcycle**
Motorrad
Motocyclette

(30) Priority: 18.04.2013 JP 2013087392
(43) Date of publication of application: 22.10.2014
(73) Proprietor: Yamaha Hatsudoki Kabushiki Kaisha, Iwata-shi, Shizuoka 438-8501 (JP)
(72) Inventor: Ito, Masato, Iwata-shi, Shizuoka 438-8501 (JP)
(74) Representative: Grünecker Patent- und Rechtsanwälte PartG mbB

(56) References cited:
- EP-A1- 2 390 170
- JP-A- 2010 036 606
- JP-A- 2011 093 354

## Description

The present invention relates to a motorcycle. A motorcycle with a headlight cover and a side cover can be taken from the prior art document EP 2 390 170 A1. In said prior art document it is suggested to provide a headlight cover integrally with side covers to form a one-piece element. Comparable cover arrangement can be also taken from the prior art document JP 2011-093354 A, on which the preamble of independent claim 1 is based. Said prior art discloses a motorcycle with a head pipe disposed so as to be inclined toward the front and downward, a front fork supported in a rotatable manner by the head pipe, a supporting member supported by the front fork and a headlight including a headlight bulb. The headlight is supported by the supporting member flashers including a leg portion are attached to the supporting member, and a lighting portion is supported by the leg portion. A meter is supported by the supporting member. The meter is disposed above the headlight, a meter cover is disposed in front of the meter, a headlight cover disposed on a lateral side of the headlight, and at least one side cover disposed on the lateral side of the headlight cover. A front edge of the side cover as seen in a side view of the vehicle is disposed to cover of an adjacent front edge of the headlight cover and front edge of the side cover extends from front to rear, so that a rear end part of said edge of the side cover is disposed rearward of part of the front edge of the headlight cover. The flasher is disposed above the headlight bulb and below an upper end of the headlight. The side cover includes an upper surface portion disposed so as to cover at least a portion of the leg portion of the flasher from above and from the front. The upper surface portion extends from a position below the flasher to a position above the flasher as seen in a side view of the vehicle. The upper surface portion extends from a position forward of the flasher to a position rearward of the flasher as seen in a side view of the vehicle.

A motorcycle is provided having a headlight, flashers, a meter, and a meter cover which rotate integrally with a front fork. For example, the motorcycle disclosed in JP 2010-228553 A includes a headlight, a front winker, a meter, a meter cover, and a side cowl which are attached to a top bridge and a bottom bridge via a support stay.

It is important for this type of motorcycle that the structure around the headlight is made compact in order to assure the bearing strength of the structure around the headlight that rotates with the front fork.

Although the compactness of the structure around the headlight is important in the abovementioned motorcycle, the headlight and the flasher are necessarily disposed a certain distance away from each other in the vehicle width direction in order to assure the visibility of both the headlight and the flasher. For example, the leg portion of the flasher may be lengthened in order to increase the distance in the vehicle width direction between the headlight and the flasher. However, when the leg portion of the flasher is lengthened, the resistance that the flasher receives from traveling wind is increased and there is a possibility that the bearing strength of the flasher may become reduced.

An object of the present invention is to provide a motorcycle having the structure around the headlight more compact, assure visibility of both the headlight and the flasher, and to provide a motorcycle with improved bearing strength of the flasher.

According to the present invention said object is solved by a motorcycle having the features of independent claim 1. Preferred embodiments are laid down in the dependent claims.

A motorcycle according to one aspect is provided with a head pipe, a front fork, a supporting member, a headlight, a flasher, a meter, a meter cover, a headlight cover, and a side cover. The head pipe is inclined toward the front and downward. The front fork is supported in a rotatable manner on the head pipe. The supporting member is supported on the front fork. The headlight includes a headlight bulb. The headlight is supported by the supporting member. The flasher includes a leg portion and a lighting portion. The leg portion is attached to the supporting member. The lighting portion is supported by the leg portion. The meter is supported by the supporting member. The meter is disposed above the headlight. The meter cover is disposed in front of the meter. The headlight cover is disposed on the lateral side of the headlight. The side cover is disposed on the lateral side of the headlight. A front edge of the side cover as seen in a side view of the vehicle is disposed rearward of a front edge of the headlight cover. The flasher is disposed above the headlight bulb and below the upper end of a headlight. The side cover includes an upper surface portion. The upper surface portion is disposed so as to cover at least a portion of the leg portion of the flasher from above and from the front. The upper surface portion extends from a position below the flasher to a position above the flasher as seen in a side view of the vehicle. The upper surface portion extends from a position forward of the flasher to a position rearward of the flasher as seen in a side view of the vehicle.

The meter cover is disposed in front of the meter and the headlight cover is disposed on the lateral side of the headlight in the motorcycle. Therefore, the headlight cover can be made more compact in comparison to when the headlight cover covers the meter and the headlight in an integrated manner. The front edge of the side cover as seen in a side view of the vehicle is disposed rearward of the front edge of the headlight cover. Therefore, the side cover can be made more compact in comparison to when the front edge of the side cover is disposed forward of the front edge of the headlight cover. In this way, the structure around the headlight can be made more compact since the headlight cover and the side cover are made more compact.

The flasher is disposed above the headlight bulb and below the upper edge of the headlight. Therefore, the flasher can be disposed closer to the center of gravity of the headlight in comparison to when the flasher is disposed above the upper edge of the headlight. Accordingly, the bearing strength of the flasher can be improved. The upper surface portion of the side cover is disposed so as to cover the leg portion of the flasher from above and from the front. Therefore, the flasher is less likely to be hit directly by the traveling wind. As a result, the resistance received by the flasher from the traveling wind can be reduced. Accordingly, the bearing strength of the flasher can be improved. By improving the bearing strength of the flasher in this way, the leg portion of the flasher can be lengthened. Consequently, the flasher and the headlight can be disposed away from each other and the visibility of both the headlight and the flasher can be assured.

At least a portion of the leg portion preferably overlaps the upper surface portion as seen in a front view of the vehicle. In this case, the resistance received by the flasher from the traveling wind from the front of the vehicle can be effectively reduced.

A rear portion of the side cover preferably includes an upper portion and a lower portion. The lower portion is disposed away from the upper portion and below the upper portion. The flasher is disposed between the upper portion and the lower portion. In this case, the leg portion of the flasher can be protected from the traveling wind by the upper portion and the lower portion of the rear portion of the side cover.

The rear end of the upper portion is preferably located rearward of the flasher. In this case, a wide area above the leg portion of the flasher can be covered by the upper portion of the rear portion of the side cover. As a result, resistance on the leg portion of the flasher due to the traveling wind can be further reduced.

The rear end of the lower portion is preferably located rearward of the flasher. In this case, a wide area below the leg portion of the flasher can be covered by the lower portion of the rear portion of the side cover. As a result, resistance on the leg portion of the flasher due to the traveling wind can be further reduced.

The side cover preferably includes a lower surface portion. The lower surface portion is disposed so as to cover the flasher from the bottom. The lower surface portion extends from a position forward of the flasher to a position rearward of the flasher as seen in a side view of the vehicle. In this case, the flasher can be protected from the traveling wind from below the flasher by the lower surface portion. As a result, resistance on the leg portion of the flasher due to the traveling wind can be further reduced.

The front end of the upper surface portion of the side cover is preferably located forward of the front end of the meter cover as seen in a side view of the vehicle. In this case, a rectifying effect due to the upper surface portion of the side cover can be improved.

The rear end of the upper surface portion of the side covers is preferably located rearward of the rear end of the meter cover as seen in a side view of the vehicle. In this case, a rectifying effect due to the upper surface portion of the side cover can be improved.

The upper surface portion of the side cover preferably has a smoothly curved shape that crosses from a position forward of the flasher to a position rearward of the flasher as seen in a side view of the vehicle. In this case, a rectifying effect due to the upper surface portion of the side cover can be improved.

An outer lateral side edge of the upper surface portion of the side cover preferably has a bent shape with an inflection point as seen from above the vehicle. The inflection point is located between the headlight and the flasher in the vehicle width direction. The inflection point is located forward of the rear end of the headlight as seen from above the vehicle. In this case, the inflection point can be disposed further away from the flasher in comparison to when the inflection point is located rearward of the rear end of the headlight. Accordingly, the visibility of the flasher can be improved.

### Advantageous Effects of Invention

According to the present invention, the structure around the headlight is made more compact, visibility of both the headlight and the flasher is assured, and a motorcycle with improved bearing strength of the flasher can be provided.

### BRIEF DESCRIPTION OF THE DRAWINGS

FIG. 1 is a side view of a motorcycle according to an embodiment.
FIG. 2 is a front view illustrating a structure around a headlight unit.
FIG. 3 is a side view illustrating the structure around the headlight unit.
FIG. 4 is a plan view illustrating the structure around the headlight unit.
FIG. 5 is an exploded view of the headlight unit.
FIG. 6 is a side view of a headlight and a headlight cover.
FIG. 7 is a side view of a left side cover.
FIG. 8 is a side view illustrating an attachment structure of the headlight unit.
FIG. 9 is a front view illustrating the attachment structure of the headlight unit.
FIG. 10 is a plan view illustrating the structure around the headlight unit.

### DETAILED DESCRIPTION OF THE EMBODIMENTS

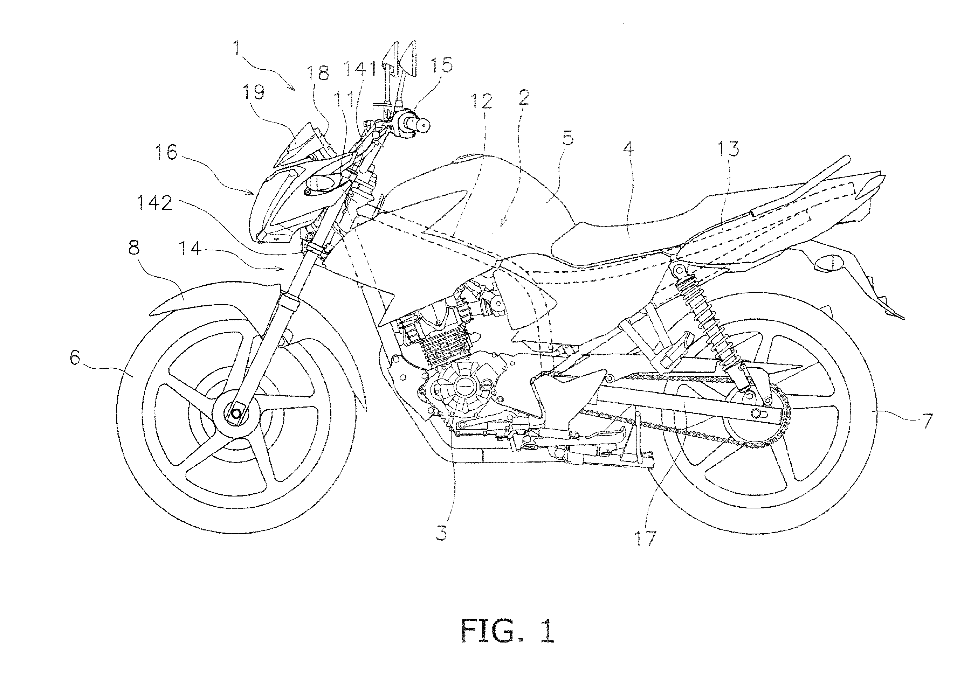

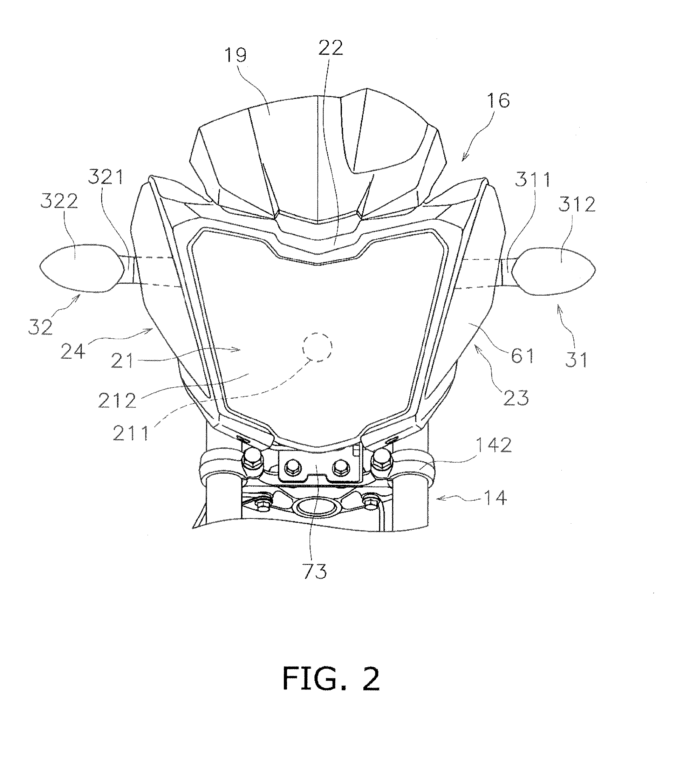

A motorcycle 1 according to a preferred embodiment is illustrated in FIG. 1. FIG. 1 is a side view of the motorcycle 1. FIG. 2 is a front view of the motorcycle 1. In the following description, unless otherwise noted, front, rear, left and right refer to these directions seen from a rider sitting on the motorcycle 1. The motorcycle 1 is provided with a vehicle frame 2, and engine 3, a seat 4, a fuel tank 5, a front wheel 6, and a rear wheel 7.

The vehicle frame 2 includes a head pipe 11, a front frame 12, and a rear frame 13. The head pipe 11 is inclined toward the front and downward. A front fork 14 is supported in a rotatable manner on the head pipe 11. The front fork 14 includes a top bridge 141 and a bottom bridge 142. A handlebar 15 is fixed to the upper end of the front fork 14. The front wheel 6 is supported in a rotatable manner at the lower portion of the front fork 14. A front fender 8 is disposed above the front wheel 6.

A swing arm 17 is coupled to the rear portion of the front frame 12 in a manner that allows swinging up and down. The rear wheel is supported in a rotatable manner on the rear portion of the swing arm 17. The rear frame 13 is extends rearward from the front frame 12.

The seat 4 and the fuel tank 5 are attached to an upper portion of the vehicle frame 2. The seat 4 is disposed above the rear frame 13. The fuel tank 5 is disposed in front of the seat 4. The fuel tank 5 is disposed so as to straddle the vehicle frame 2 to the rear of the head pipe 11. Specifically, the fuel tank 5 is disposed above the front frame 12.

The engine 3 transmits driving power to the rear wheel 7 via transmission members such as a chain. The engine 3 is arranged below the fuel tank 5. The engine 3 is supported by the front frame 12.

The motorcycle 1 includes a headlight unit 16, a meter 18, and a meter cover 19. The headlight unit 16 is disposed in front of the head pipe 11. The meter 18 is disposed above the headlight unit 16. The meter cover 19 is disposed in front of the meter 18. The meter cover 19 is disposed above the headlight unit 16.

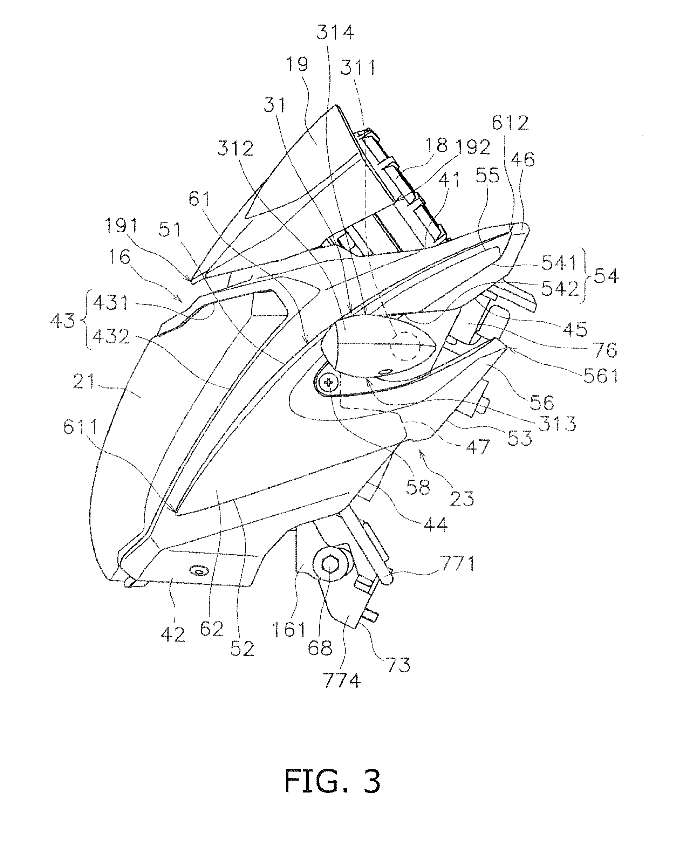

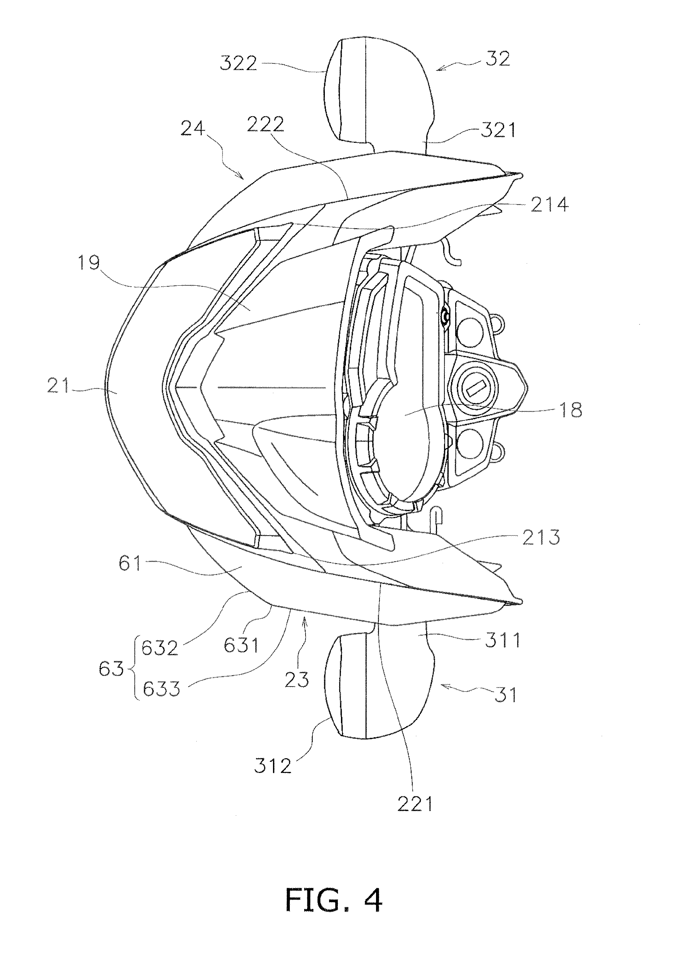

FIG. 2 is a front view illustrating a structure around the headlight unit 16. FIG. 3 is a side view illustrating the structure around the headlight unit 16. FIG. 4 is a plan view illustrating the structure around the headlight unit 16. The headlight unit 16 includes a headlight 21, a headlight cover 22, a left side cover 23, and a right side cover 24. The headlight 21 includes a headlight bulb 211 and a transparent member 212. The transparent member 212 is a cover for covering the headlight bulb 211 from the front and is formed with a transparent material.

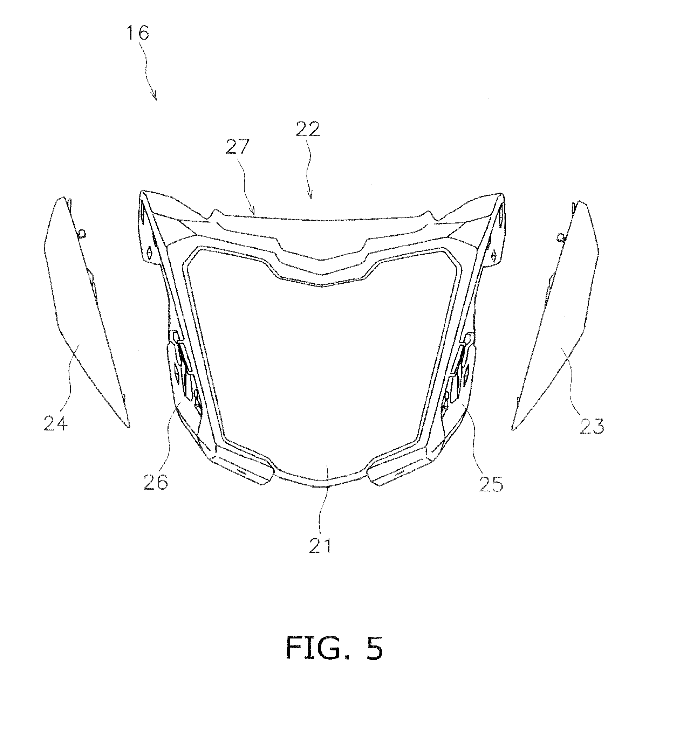

FIG. 5 is an exploded view of the headlight unit 16. The headlight cover 22 is disposed on both sides of the headlight 21. The headlight cover 22 is disposed above the headlight 21. Specifically, the headlight cover 22 is disposed so as to cover the headlight 21 from above and on both sides as seen from the front of the vehicle. The transparent member 212 is attached to the headlight cover 22. The headlight cover 22 is a member that is separate from the meter cover 19. The headlight cover 22 includes a left cover side surface 25, a right cover side surface 26, and a cover upper surface 27. The left cover side surface 25 is disposed to the right of the headlight 21 as seen from the front of the vehicle. The right cover side surface 26 is disposed to the left of the headlight 21 as seen from the front of the vehicle. The cover upper surface 27 is disposed above the headlight 21 as seen from the front of the vehicle,

The left side cover 23 is a member that is separate from the headlight cover 22. The left side cover 23 is disposed to the left of the headlight cover 22. The left side cover 23 is attached to the left cover side surface 25 of the headlight cover 22. The right side cover 24 is a member that is separate from the headlight cover 22. The right side cover 24 is disposed to the right of the headlight cover 22. The right side cover 24 is attached to the right cover side surface 26 of the headlight cover 22.

As illustrated in FIGS. 2 to 4, the motorcycle 1 includes a left flasher 31 and a right flasher 32. The left flasher 31 includes a left leg portion 311 and a left lighting portion 312. The left lighting portion 312 is supported by the left leg portion 311. The right flasher 32 includes a right leg portion 321 and a right lighting portion 322. The right lighting portion 322 is supported by the right leg portion 321. The left flasher 31 and the right flasher 32 are disposed above the headlight bulb 211 and below the upper end of the headlight 21. In the present embodiment, the entire left flasher 31 is disposed above the headlight bulb 211 and below the upper end of the headlight 21. However, a portion of the left flasher 31 may be disposed higher than the headlight bulb 211. Alternatively, a portion of the left flasher 31 may be disposed lower than the upper end of headlight 21. The right flasher 32 is disposed in a similar manner as the left flasher 31.

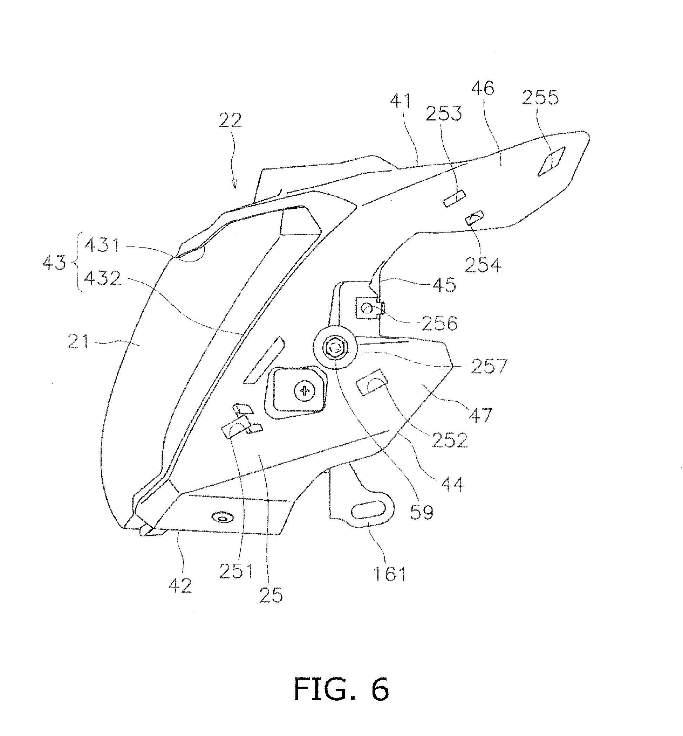

FIG. 6 is a side view of the headlight 21 and the headlight cover 22. The headlight cover 22 includes an upper edge 41 and a lower edge 42 as seen in a side view of the vehicle. The upper edge 41 of the headlight cover 22 is inclined rearward and upward. The lower edge 42 of the headlight cover 22 is inclined rearward and downward.

The headlight cover 22 includes a front edge 43 as seen in a side view of the vehicle. The front edge 43 of the headlight cover 22 is adjacent to the headlight 21. Specifically, the front edge 43 of the headlight cover 22 is adjacent to the transparent member 212 of the headlight 21. The front edge 43 includes an upper front edge 431 and a left front edge 432. The upper front edge 431 is located above the headlight 21. The upper front edge 431 is inclined rearward and upward. The left front edge 432 is located behind the headlight 21 as seen in a side view of the vehicle. The left front edge 432 is inclined rearward and upward. The rear end of the upper front edge 431 and the upper end of the left front edge 432 are joined.

The headlight cover 22 includes a rear edge 44 as seen in a side view of the vehicle. The rear edge 44 of the headlight cover 22 is inclined rearward and upward. The headlight cover 22 includes a recessed portion 45. The recessed portion 45 has a shape that is recessed from the rear edge 44 toward the front. The rear portion of the left cover side surface 25 includes an upper portion 46 and a lower portion 47. The upper portion 46 is located above the recessed portion 45. The lower portion 47 is located below the recessed portion 45. An explanation of the right cover side surface 26 of the headlight cover 22 is omitted since the structure is symmetrical with the left cover side surface 25.

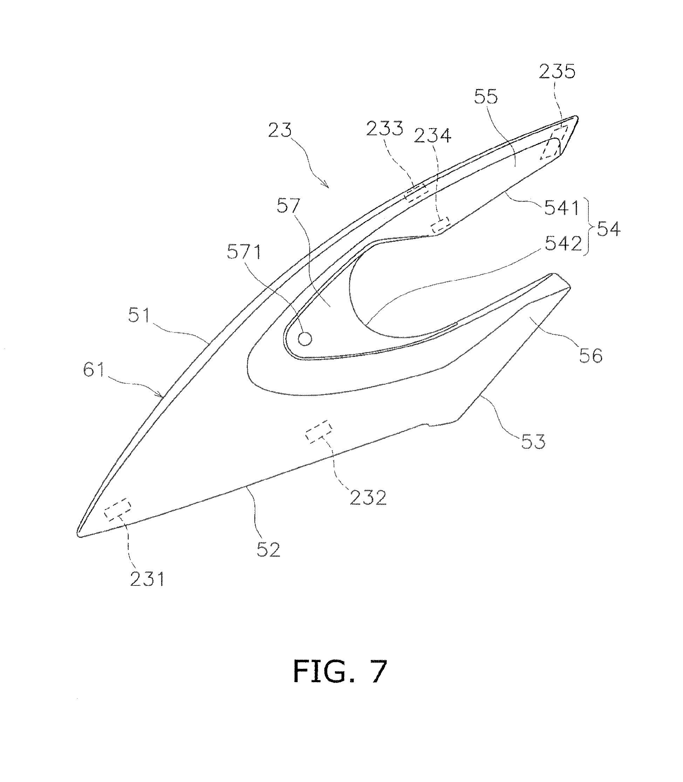

FIG. 7 is a side view of the left side cover 23. The left side cover 23 includes a front edge 51, a lower edge 52, and a rear edge 53. The front edge 51 of the left side cover 23 is inclined rearward and upward. The lower edge 52 of the left side cover 23 is inclined rearward and upward. The lower edge 52 of the left side cover 23 extends obliquely rearward and upward from the lower edge of the front edge 51 of the left side cover 23. The rear edge 53 of the left side cover 23 is inclined rearward and upward. The rear edge 53 of the left side cover 23 extends obliquely rearward and upward from the rear end of the lower edge 52 of the left side cover 23 and

The left side cover 23 includes a recessed portion 54. The recessed portion 54 has a shape that is recessed from the rear edge 53 of the left side cover 23 toward the front. The recessed portion 54 includes a first recessed portion 541 and a second recessed portion 542. The second recessed portion 542 is joined to the first recessed portion 541 and is located in front of the first recessed portion 541. The recessed portion 54 has a shape that is curved between the first recessed portion 541 and the second recessed portion 542. The first recessed portion 541 extends obliquely forward and downward from the rear edge 53 of the left side cover 23. The second recessed portion 542 extends forward from the front end of the first recessed portion 541. The left side cover 23 includes a plate portion 57. The plate portion 57 is located in front of the second recessed portion 542. The plate portion 57 includes a hole 571.

The rear portion of the left side cover 23 includes an upper portion 55 and a lower portion 56. The upper portion 55 is located above the recessed portion 54. The lower portion 56 is located below the recessed portion 54. Therefore, the lower portion 56 is disposed below the upper portion 55 and away from the upper portion 55.

The inner surface of the left side cover 23 includes a plurality of projections 231 to 235. As illustrated in FIG. 6, the left cover side surface 25 of the headlight cover 22 is provided with a plurality of openings 251 to 255. The left side cover 23 is attached to the left cover side surface 25 by engaging the projections 231 to 235 of the left side cover 23 with the respective openings 251 to 255 of the left cover side surface 25. A threaded hole 256 is provided on the left cover side surface 25. The left side cover 23 is attached to the left cover side surface 25 by inserting a screw 58 illustrated in FIG. 3 through the hole 571 in the plate portion 57 of the left side cover 23 and into the threaded hole 256 of the left cover side surface 25.

As illustrated in FIG. 3, the front edge 51 of the left side cover 23 is located rearward of the front edge 43 of the headlight cover 22 as seen in a side view of the vehicle. Specifically, the front edge 51 of the left side cover 23 is disposed rearward of the left front edge 432 of the headlight cover 22. As illustrated in FIGS. 2 to 4, the left side cover 23 includes an upper surface portion 61. The abovementioned front edge 51 of the left side cover 23 as seen in a side view of the vehicle is included in the upper surface portion 61. The upper surface portion 61 is disposed so as to cover a portion of the left leg portion 311 of the left flasher 31 from above and from the front. The upper surface portion 61 may be disposed so as to cover the entire left leg portion 311 of the left flasher 31 from above. The upper surface portion 61 may be disposed so as to cover the entire left leg portion 311 of the left flasher 31 from the front. As illustrated in FIG. 2, a portion of the left leg portion 311 overlaps the upper surface portion 61 as seen from the front of the vehicle. A portion of the left leg portion 311 overlaps the upper surface portion 61 as seen from above the vehicle. The entire left leg portion 311 may overlap the upper surface portion 61 as seen from the front of the vehicle. The entire left leg portion 311 may overlap the upper surface portion 61 as seen from above the vehicle.

The upper surface portion 61 extends from a position below the left flasher 31 to a position above the left flasher 31 as seen in a side view of the vehicle. The upper surface portion 61 extends from a position forward of the left flasher 31 to a position rearward of the left flasher 31 as seen in a side view of the vehicle. A front (end) edge 611 of the upper surface portion 61 of the left side cover 23 is located forward of a front (end) edge 191 of the meter cover 19 as seen in a side view of the vehicle. A rear end 612 of the upper surface portion 61 of the left side cover 23 is located rearward of a rear end 192 of the meter cover 19 as seen in a side view of the vehicle. The upper surface portion 61 of the left side cover 23 has a smoothly curved shape that crosses from a position forward of the left flasher 31 to a position rearward of the left flasher 31 as seen in a side view of the vehicle.

The left side cover 23 includes a lower surface portion 62. The lower surface portion 62 is disposed so as to cover the left flasher 31 from the bottom. The lower surface portion 62 extends from a position forward of the left flasher 31 to a position rearward of the left flasher 31 as seen in a side view of the vehicle. The abovementioned lower edge 52 of the left side cover 23 as seen in a side view of the vehicle is included in the lower surface portion 62. The abovementioned rear edge 53 of the left side cover 23 as seen in a side view of the vehicle is included in the lower surface portion 62. A front end of the lower surface portion 62 is located forward of the left flasher 31 as seen in a side view of the vehicle. A rear end of the lower surface portion 62 is located rearward of the left flasher 31 as seen in a side view of the vehicle

The upper portion 55 of the left side cover 23 is a portion between the upper surface portion 61 and the recessed portion 54. The lower portion 56 of the left side cover 23 is a portion between the lower surface portion 62 and the recessed portion 54. The left flasher 31 is disposed between the upper portion 55 and the lower portion 56. A rear end of the upper portion 55 is located rearward of the left flasher 31. The rear end of the upper portion 55 is located above the left flasher 31. The rear end of the lower portion 56 is located rearward of the left flasher 31. A rear end 561 of the lower portion 56 is located above a bottom portion 313 of the left flasher 31. The rear end 561 of the lower portion 56 is located below a top portion 314 of the left flasher 31. The entire upper portion 55 of the left side cover 23 is disposed so as to overlap the upper portion 46 of the left cover side surface 25 as seen in a side view of the vehicle. The lower portion 56 of the left side cover 23 is disposed so as to overlap the lower portion 47 of the left cover side surface 25 as seen in a side view of the vehicle. A portion of the lower portion 56 of the left side cover 23 is disposed so as to project toward the rear from the lower portion 47 of the left cover side surface 25 as seen in a side view of the vehicle.

As illustrated in FIG. 4, the headlight cover 22 includes a left side edge 221 and a right side edge 222 as seen from above the vehicle. The left side edge 221 is inclined rearward and toward the left. The right side edge 222 is inclined rearward and toward the right. The left side edge 221 and the right side edge 222 have a smoothly curved shaped. The meter cover 19 is disposed between the left side edge 221 and the right side edge 222 of the headlight cover 22 as seen from above the vehicle. The width of the meter cover 19 is smaller than the width between a left end portion 213 and a right end portion 214 of the headlight cover 22 as seen from above the vehicle. The left end portion 213 and the right end portion 214 of the headlight 21 are congruent with the rear end of the headlight 21 as seen from above the vehicle.

The outer lateral side edge 63 of the upper surface portion 61 of the left side cover 23 has a bent shape with an inflection point 631 as seen from above the vehicle. The outer lateral side edge 63 of the upper surface portion 61 of the left side cover 23 includes a first inclined edge 632 and a second inclined edge 633. The first inclined edge 632 is inclined rearward and toward the left. The second inclined edge 633 is inclined rearward and toward the left. The rear end of the first inclined edge 632 is joined to the front end of the second inclined edge 633. The angle of inclination of the first inclined edge 632 with respect to the front-back direction of the vehicle is greater than the angle of inclination of the second inclined edge 633 with respect to the front-back direction of the vehicle. The inflection point 631 is located between the first inclined edge 632 and the second inclined edge 633. The inflection point 631 is located between the headlight 21 and the left flasher 31 in the vehicle width direction. The inflection point 631 is located forward of the rear end of the headlight 21 as seen from above the vehicle. The inflection point 631 is located forward of the left flasher 31.

The right side cover 24 has the same structure as the left side cover 23 and has left/right symmetry with the left side cover 23. The right flasher 32 has the same structure as the left flasher 31 and has left/right symmetry with the left flasher 31. Therefore an explanation of the details of the right side cover 24 and the right flasher 32 are omitted.

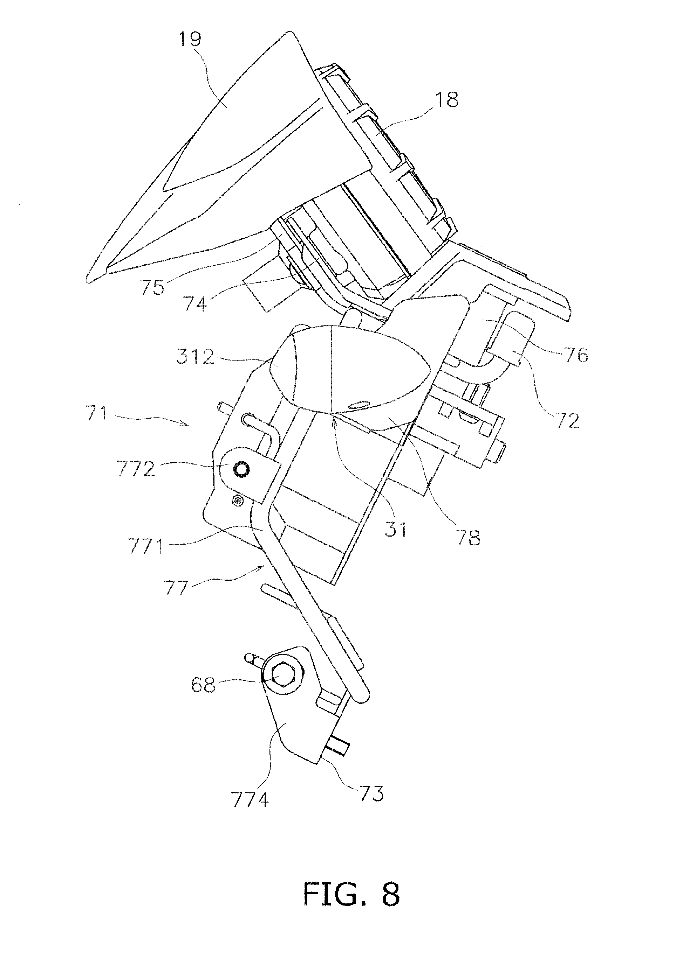

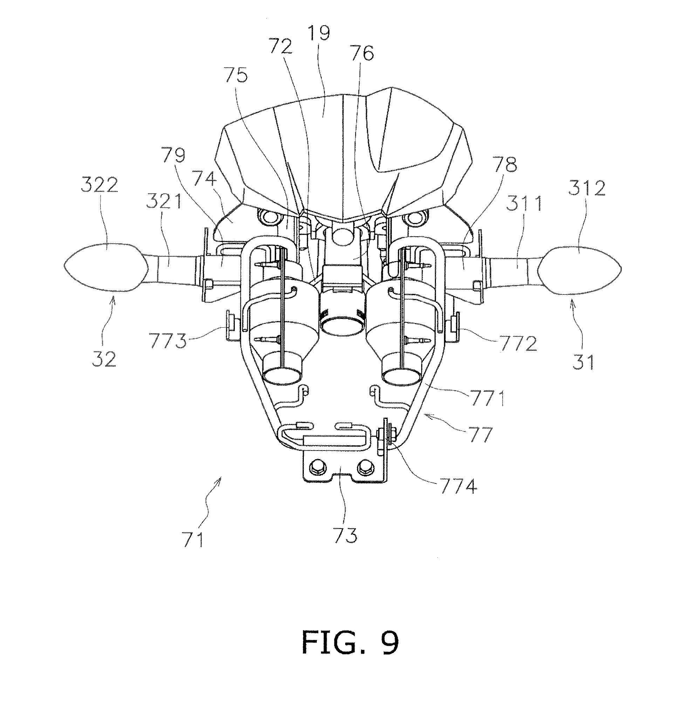

FIG. 8 is a side view illustrating an attachment structure of the headlight unit 16. FIG. 9 is a front view illustrating the attachment structure of the headlight unit 16. As illustrated in FIGS. 8 and 9, the motorcycle 1 includes a supporting member 71. The supporting member 71 includes an upper attachment portion 72 and a lower attachment portion 73. The upper attachment portion 72 is attached to the top bridge 141 of the front fork 14. The lower attachment portion 73 is attached to the bottom bridge 142 of the front fork 14. Consequently, the supporting member 71 is supported on the front fork 14.

The supporting member 71 includes a meter attachment portion 74 and a meter cover attachment portion 75. The meter 18 is attached to the meter attachment portion 74. The meter cover 19 is attached to the meter cover attachment portion 75. The meter attachment portion 74 is a plate-shaped member. The meter cover attachment portion 75 is fixed to the meter attachment portion 74. The supporting member 71 includes a coupling member 76. The coupling member 76 is a pipe-shaped member. The coupling member 76 is fixed to the meter attachment portion 74. The abovementioned upper attachment portion 72 is fixed to the coupling member 76.

The supporting member 71 includes a headlight attachment portion 77. The headlight unit 16 is attached to the headlight attachment portion 77. The headlight attachment portion 77 includes a frame portion 771, a left bracket portion 772, and a right bracket portion 773. The frame portion 771 is a bent rod-shaped member. The left bracket portion 772 and the right bracket portion 773 are fixed to the frame portion 771. A bolt hole is provided in each of the left bracket portion 772 and the right bracket portion 773.

As illustrated in FIG. 6, the left cover side surface 25 of the headlight cover 22 is provided with a hole 257. The left cover side surface 25 is fixed to the left bracket portion 772 by passing a bolt 59 through the hole 257 of the left cover side surface 25 and the bolt hole in the left bracket portion 772. Although not illustrated in the drawings, a hole is provided in the right cover side surface 26 of the headlight cover 22 and the right cover side surface 26 is fixed to the right bracket portion 773 by passing a bolt through a hole in the right cover side surface 26 and the bolt hole in the right bracket portion 773.

The headlight attachment portion 77 includes a lower bracket portion 774. The lower bracket portion 774 is fixed to the abovementioned lower attachment portion 73. As illustrated in FIG. 3, the headlight unit 16 includes a headlight bracket 161. The headlight bracket 161 projects downward from the headlight cover 22. The headlight bracket 161 is fixed to the lower bracket portion 774 with a bolt 68.

As illustrated in FIG. 9, the supporting member 71 includes a left flasher attachment portion 78 and a right flasher attachment portion 79. The left flasher attachment portion 78 and the right flasher attachment portion 79 are both fixed to the frame portion 771. The left leg portion 311 of the left flasher 31 is attached to the left flasher attachment portion 78. The right leg portion 321 of the right flasher 32 is attached to the right flasher attachment portion 79. As described above, the meter 18, the meter cover 19, the headlight unit 16 and the left and right flashers are supported in an integrated manner by the supporting member 71, and are attached to the front fork 14 via the supporting member 71.

The features of the motorcycle 1 according to the present embodiment are as follows. The meter cover 19 is disposed in front of the meter 18 and the headlight cover 22 is disposed on the both lateral sides of the headlight 21. Therefore, the headlight cover 22 can be made more compact in comparison to when the headlight cover 22 covers the meter 18 and the headlight 21 in an integrated manner. The front edge 51 of the left side cover 23 is located rearward of the front edge 43 of the headlight cover 22 as seen in a side view of the vehicle. Therefore, the left side cover 23 can be made more compact in comparison to when the front edge 51 of the left side cover 23 is disposed forward of the front edge 43 of the headlight cover 22. In this way, the structure around the headlight 21 can be made more compact due to the headlight cover 22 and the left side cover 23 being made more compact.

Conversely, the distance between the headlight 21 and the left flasher 31 in the vehicle width direction is increased by lengthening the left leg portion 311 of the left flasher 31 which is effective in assuring the visibility of both the headlight 21 and the left flasher 31. However, when both the headlight cover 22 and the left side cover 23 are made more compact as described above and the left leg portion 311 of the left flasher 31 is lengthened, the resistance that the left flasher 31 receives from traveling wind is increased and there is a possibility that the bearing strength of the left flasher 31 may become reduced. Accordingly, in the motorcycle 1 of the present embodiment, the left flasher 31 is disposed above the headlight bulb 211 and below the upper end of the headlight 21. Therefore, the left flasher 31 can be disposed closer to the center of gravity of the headlight 21 in comparison to when the left flasher 31 is disposed above the upper end of the headlight 21. As a result, the bearing strength of the left flasher 31 can be improved. The upper surface portion 61 of the left side cover 23 is disposed so as to cover the left leg portion 311 of the left flasher 31 from above and from the front. Therefore, the left flasher 31 is less likely to be hit directly by the traveling wind. As a result, the resistance received by the left flasher 31 from the traveling wind can be reduced. As a result, the bearing strength of the left flasher 31 can be improved. By improving the bearing strength of the left flasher 31 in this way, the left leg portion 311 of the left flasher 31 can be lengthened. Consequently, the left flasher 31 and the headlight 21 can be disposed further away from each other and the visibility of both the headlight 21 and the left flasher 31 can be assured. In this way, the structure around the headlight 21 can be made more compact, the visibility of the left flasher 31 can be assured, and the bearing strength of the left flasher 31 can be improved in the motorcycle 1 in a compatible manner according to the present embodiment.

The left leg portion 311 overlaps the upper surface portion 61 as seen from the front of the vehicle. In this case, the resistance received by the left flasher 31 from the traveling wind from the front of the vehicle can be effectively reduced. Consequently, since the bearing strength of the left flasher 31 can be assured, the left flasher 31 and the headlight 21 can be disposed further away from each other and the visibility of both the headlight 21 and the left flasher 31 can be assured.

The left flasher 31 is disposed between the upper portion 55 and the lower portion 56 of the rear portion of the left side cover 23. As a result, the left leg portion 311 of the left flasher 31 can be protected from the traveling wind by the upper portion 55 and the lower portion 56 of the rear portion of the left side cover 23. Consequently, since the bearing strength of the left flasher 31 can be assured, the left flasher 31 and the headlight 21 can be disposed further away from each other and the visibility of both the headlight 21 and the left flasher 31 can be assured.

The rear end of the upper portion 55 is located rearward of the left flasher 31. As a result, a wide range above the left leg portion 311 of the left flasher 31 can be covered by the upper portion 55 of the rear portion of the left side cover 23. As a result, the resistance received by the left leg portion 311 of the left flasher 31 from the traveling wind can be further reduced. Consequently, since the bearing strength of the left flasher 31 can be assured, the left flasher 31 and the headlight 21 can be disposed further away from each other and the visibility of both the headlight 21 and the left flasher 31 can be assured.

The rear end of the lower portion 56 is located rearward of the left flasher 31. As a result, a wide range below the left leg portion 311 of the left flasher 31 can be covered by the lower portion 55 of the rear portion of the left side cover 23. As a result, the resistance received by the left leg portion 311 of the left flasher 31 from the traveling wind can be further reduced. Consequently, since the bearing strength of the left flasher 31 can be assured, the left flasher 31 and the headlight 21 can be disposed further away from each other and the visibility of both the headlight 21 and the left flasher 31 can be assured.

The lower surface portion 62 of the left side cover 23 extends from a position forward of the left flasher 31 to a position rearward of the left flasher 31 as seen in a side view of the vehicle. As a result, the left flasher 31 can be protected from the traveling wind from below the left flasher 31 by the lower surface portion 62. As a result, the resistance received by the left leg portion 311 of the left flasher 31 from the traveling wind can be further reduced. Consequently, since the bearing strength of the left flasher 31 can be assured, the left flasher 31 and the headlight 21 can be disposed further away from each other and the visibility of both the headlight 21 and the left flasher 31 can be assured.

The front end of the upper surface portion 61 of the left side cover 23 is located forward of the front end of the meter cover 19 as seen in a side view of the vehicle. As a result, a rectifying effect due to the upper surface portion 61 of the left side cover 23 can be improved.

The rear end of the upper surface portion 61 of the left side cover 23 is located rearward of a rear end of the meter cover 19 as seen in a side view of the vehicle. As a result, the rectifying effect due to the upper surface portion 61 of the left side cover 23 can be improved.

The upper surface portion 61 of the left side cover 23 has a smoothly curved shape that crosses from a position forward of the left flasher 31 to a position rearward of the left flasher 31 as seen in a side view of the vehicle. As a result, the rectifying effect due to the upper surface portion 61 of the left side cover 23 can be improved.

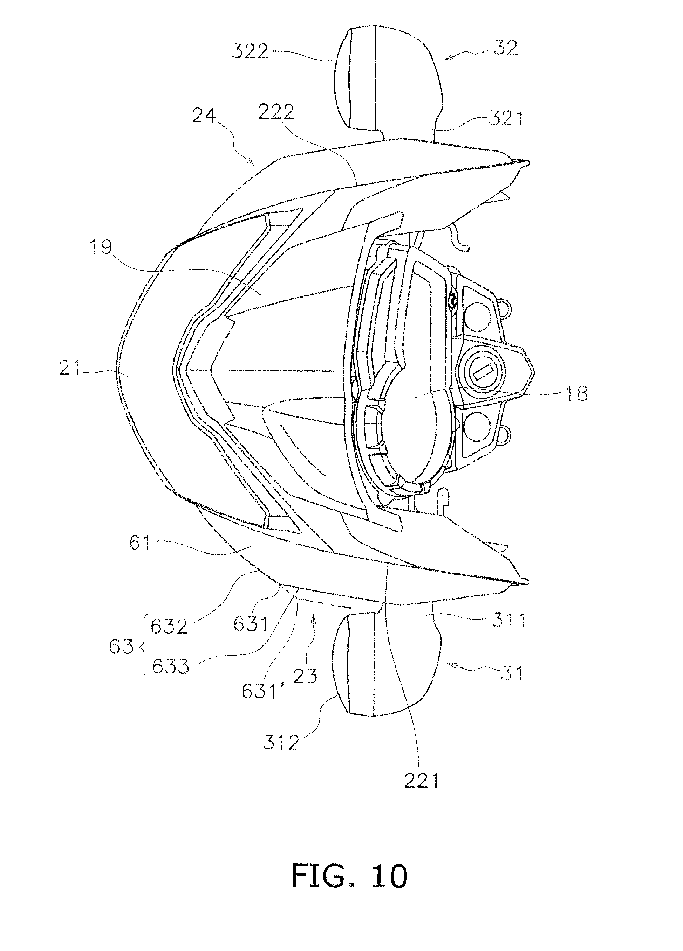

The outer lateral side edge 63 of the upper surface portion 61 of the left side cover 23 has a bent shape with an inflection point 631 as seen from above the vehicle. The inflection point 631 is located between the headlight 21 and the left flasher 31 in the vehicle width direction. The inflection point 631 is located forward of the rear end of the headlight 21 as seen from above the vehicle. As a result, the inflection point 631 can be disposed further away from the left flasher 31 as illustrated in FIG. 10 in comparison to when the inflection point 631 is located rearward of the rear end of the headlight 21 (see the inflection point 631'). Accordingly, the visibility of the left flasher 31 can be improved.

The effects of the right side cover 24 and the right flasher 32 are the same as the effects of the abovementioned left side cover 23 and the left flasher 31.

The shapes and dispositions of the headlight 21, the left and right flashers, the meter 18, the meter cover 19, the headlight cover 22, and the left and right side covers are not limited to the shapes and dispositions described above and may be modified. The supporting member 71 is not limited to being supported by the top bridge 141 and the bottom bridge 142 of the front fork 14 and may be supported by other portions.

While the headlight 21 is supported by the supporting member 71 through the headlight cover 22 in the above embodiment, the headlight 21 may be supported directly by the supporting member 71.

While the right cover side surface 26 and the left cover side surface 25 of the headlight cover 22 are symmetrical in the above embodiment, the right cover side surface 26 and the left cover side surface 25 may be asymmetric. While the right side cover 24 and the left side cover 23 are symmetrical in the above embodiment, the right side cover 24 and the left side cover 23 may be asymmetric. Specifically, at least one of the right side cover 24 and the left side cover 23 may satisfy the requirements of the side cover in the present invention.

## Claims

1. A motorcycle comprising:
a head pipe (11) disposed so as to be inclined toward the front and downward;
a front fork (14) supported in a rotatable manner by the head pipe (11);
a supporting member (71) supported by the front fork (14);
a headlight (21) including a headlight bulb (211), the headlight (21) being supported by the supporting member (71);
at least one flasher (31,32) including a leg portion (311,321) attached to the supporting member (71), and a lighting portion (312,322) supported by the leg portion (311,321);
a meter (18) supported by the supporting member (71), the meter (18) being disposed above the headlight (21);
a meter cover (19) disposed in front of the meter (18);
a headlight cover (22) disposed on a lateral side of the headlight (21); and
at least one side cover (23,24) disposed on the lateral side of the headlight cover (22);
wherein
the flasher (31,32) is disposed above the headlight bulb (211) and below an upper end of the headlight (21);
the side cover (23,24) includes an upper surface portion (61) disposed so as to cover at least a portion of the leg portion (311,321) of the flasher (31,32) from above and from the front;
the upper surface portion (61) extends from a position below the flasher (31,32) to a position above the flasher (31,32) as seen in a side view of the vehicle;
the upper surface portion (61) extends from a position forward of the flasher (31,32) to a position rearward of the flasher (31,32) as seen in a side view of the vehicle
**characterized in that** the side cover (23,24) is a member that is separate from the headlight cover (22) and attached to a lateral cover side surface (25,26) of the headlight cover (22) and a front edge (51) of the side cover (23,24) as seen in a side view of the vehicle is disposed rearward of a front edge (43) of the headlight covers (22).

2. A motorcycle according to claim 1, **characterized in that** at least a portion of the leg portion (311,321) overlaps the upper surface portion (61) as seen from the front of the vehicle.

3. A motorcycle according to claim 1 or 2, **characterized in that** a rear portion of the side cover (23,24) includes an upper portion (55) and a lower portion (56) disposed below the upper portion (55) and away from the upper portion (55); and
the flasher (31,32) is disposed between the upper portion (55) and the lower portion (56).

4. A motorcycle according to claim 3, **characterized in that** a rear end of the upper portion (55) is located rearward of the flasher (31,32).

5. A motorcycle according to claim 3 or 4, **characterized in that** a rear end (561) of the lower portion (56) is located rearward of the flasher (31,32).

6. A motorcycle according to any one of claims 1 to 5, **characterized in that** the side cover (23,24) includes a lower surface portion (62) disposed so as to cover the flasher (31,32) from the bottom; and
the lower surface portion (62) extends from a position forward of the flasher (31,32) to a position rearward of the flasher (31,32) as seen in a side view of the vehicle.

7. A motorcycle according to any one of claims 1 to 6, **characterized in that** a front end (611) of the upper surface portion (61) of the side cover (23,24) is located forward of a front end (191) of the meter cover (19) as seen in a side view of the vehicle.

8. A motorcycle according to any one of claims 1 to 7, **characterized in that** a rear end (612) of the upper surface portion (61) of the side cover (23,24) is located rearward of a rear end (192) of the meter cover (19) as seen in a side view of the vehicle.

9. A motorcycle according to any one of claims 1 to 8, **characterized in that** the upper surface portion (61) of the side cover (23,24) has a smoothly curved shape that crosses from a position forward of the flasher (31,32) to a position rearward of the flasher (31,32) as seen in a side view of the vehicle.

10. A motorcycle according to any one of claims 1 to 9, **characterized in that** an outer lateral side edge (63) of the upper surface portion (61) of the side cover (23,24) has a bent shape with an inflection point (631) located between the headlight (21) and the flasher (31,32) in the vehicle width direction as seen in a top view of the vehicle; and the inflection point (631) is located forward of a rear end of the headlight (21) as seen in a top view of the vehicle.

11. A motorcycle according to any one of claims 1 to 10, **characterized by**
a left flasher (31) including a left leg portion (311) attached to the supporting member (71), and a left lighting portion (312) supported by the left leg portion (311), and a right flasher (32) including a right leg portion (321) attached to the supporting member (71), and a right lighting portion (322) supported by the right leg portion (321);
a left side cover (23) disposed on the left lateral side of the headlight cover (22), and a right side cover (24) disposed on the right lateral side of the headlight cover (22); wherein the front edge (51) of the left or right side cover (23,24) as seen in the respective side view of the vehicle is disposed rearward of the front edge (43) of the headlight cover (22);
the left and right flashers (31,32) are disposed above the headlight bulb (211) and below the upper end of the headlight (21);
the left and right side covers (23,24) each includes an upper surface portion (61) disposed so as to cover at least a portion of the left and right leg portions (311,321) of the left and right flashers (31,32) from above and from the front.

## Patentansprüche

1. Ein Motorrad mit:
einem Kopfrohr (11), angeordnet, so dass dieses zu der Vorderseite und nach unten geneigt ist;
einer Vordergabel (14), gelagert in einer drehbaren Weise durch das Kopfrohr (11);
einem Lagerungselement (71), gelagert durch die Vordergabel (14);
einem Scheinwerfer (21), der eine Scheinwerferlampe (211) beinhaltet, der Scheinwerfer (21) ist durch das Lagerungselement (71) gelagert;
zumindest einem Blinker (31, 32), der einen Schaftabschnitt (311, 321), angebracht an dem Lagerungselement (71), und einen Leuchtabschnitt (312, 322) beinhaltet, gelagert durch den Schaftabschnitt (311, 321);
einem Anzeigeinstrument (18), gelagert durch das Lagerungselement (71), das Anzeigeinstrument (18) ist oberhalb des Scheinwerfers (21) positioniert;
einer Anzeigeinstrument-Abdeckung (19), angeordnet vor dem Anzeigeelement (18); einer Scheinwerfer-Abdeckung (22), angeordnet an einer Querseite des Scheinwerfers (21); und zumindest eine Seiten-Abdeckung (23, 24), angeordnet an der Querseite der Scheinwerfer-Abdeckung (22); wobei
der Blinker (31, 32) oberhalb der Scheinwerferlampe (211) und unterhalb eines oberen Endes des Scheinwerfers (21) positioniert ist;
die Seiten-Abdeckung (23, 24) beinhaltet einen oberen Flächenabschnitt (61), positioniert, so dass dieser zumindest einen Abschnitt des Schaftabschnitts (311, 321) des Blinkers (31, 32) von oben und von vorne abdeckt;
der obere Flächenabschnitt (61) sich von einer Position unterhalb des Blinkers (31, 32) zu einer Position oberhalb des Blinkers (31, 32) erstreckt, gesehen in einer Seitenansicht des Fahrzeugs;
der obere Flächenabschnitt (61) sich von einer Position vor dem Blinker (31, 32) zu einer Position hinter dem Blinker (31, 32) erstreckt, wie in einer Seitenansicht des Fahrzeugs gesehen, **dadurch gekennzeichnet, dass** die Seiten-Abdeckung (23, 24) ein Element ist, das getrennt von der Scheinwerfer-Abdeckung (22) ist und an einer Quer-Abdeckungs-Seitenfläche (25, 26) der Scheinwerfer-Abdeckung (22) und einer Vorderkante (51) der Seiten-Abdeckung (23, 24) angebracht ist, wie in einer Seitenansicht des Fahrzeugs gezeigt, ist hinter einer Vorderkante (43) der Scheinwerfer-Abdeckung (22) positioniert.

2. Ein Motorrad gemäß Anspruch 1, **dadurch gekennzeichnet, dass** zumindest ein Abschnitt des Schaftabschnitts (311, 321) den oberen Flächenabschnitt (61) überlappt, wie von vorne von dem Fahrzeug gesehen.

3. Ein Motorrad gemäß Anspruch 1 oder 2, **dadurch gekennzeichnet, dass** ein hinterer Abschnitt der Seiten-Abdeckung (23, 24) einen oberen Abschnitt (55) und einen unteren Abschnitt (56) beinhaltet, positioniert unterhalb des oberen Abschnitts (55) und entfernt von dem oberen Abschnitt (55); und
der Blinker (31, 32) ist zwischen dem oberen Abschnitt (55) und dem unteren Abschnitt (56) positioniert.

4. Ein Motorrad gemäß Anspruch 3, **dadurch gekennzeichnet, dass** ein hinteres Ende des oberen Abschnitts (55) hinter dem Blinker (31, 32) angeordnet ist.

5. Ein Motorrad gemäß Anspruch 3 oder 4, **dadurch gekennzeichnet, dass** ein hinteres Ende (561) des unteren Abschnitts (56) hinter dem Blinker (31, 32) angeordnet ist.

6. Ein Motorrad gemäß einem der Ansprüche 1 bis 5, **dadurch gekennzeichnet, dass** die Seiten-Abdeckung (23, 24) einen unteren Flächenabschnitt (62) beinhaltet, angeordnet, so dass dieser den Blinker (31, 32) von unten abdeckt; und
der untere Flächenabschnitt (62) sich von einer Position vor dem Blinker (31, 32) zu einer Position hinter dem Blinker (31, 32) erstreckt, wie in einer Seitenansicht des Fahrzeugs gezeigt.

7. Ein Motorrad gemäß irgendeinem der Ansprüche 1 bis 6, **dadurch gekennzeichnet, dass** ein vorderes Ende (611) des oberen Flächenabschnitts (61) der Seiten-Abdeckung (23, 24) vor einem vorderen Ende (191) der Anzeigeinstrument-Abdeckung (19) angeordnet ist, wie in einer Seitenansicht des Fahrzeugs gezeigt.

8. Ein Motorrad gemäß irgendeinem der Ansprüche 1 bis 7, **dadurch gekennzeichnet, dass** ein hinteres Ende (612) des oberen Flächenabschnitts (61) der Seiten-Abdeckung (23, 24) hinter einem hinteren Ende (192) der Anzeigeinstrument-Abdeckung (19) angeordnet ist, wie in einer Seitenansicht des Fahrzeugs gezeigt.

9. Ein Motorrad gemäß irgendeinem der Ansprüche 1 bis 8, **dadurch gekennzeichnet, dass** der obere Flächenabschnitt (61) der Seiten-Abdeckung (23, 24) eine weichgekrümmte Form hat, die sich von einer Position vor dem Blinker (31, 32) zu einer Position hinter dem Blinker (31, 32) kreuzt, wie in einer Seitenansicht des Fahrzeugs gezeigt.

10. Ein Motorrad gemäß irgendeinem der Ansprüche 1 bis 9, **dadurch gekennzeichnet, dass** eine äußere Querseitenkante (63) des oberen Flächenabschnitts (61) der Seiten-Abdeckung (23, 24) eine gebogene Form hat, mit einem Knickpunkt (631), angeordnet zwischen dem Scheinwerfer (21) und dem Blinker (31, 32) in der Fahrzeug-Breiten-Richtung, wie in einer Draufsicht des Fahrzeugs gezeigt; und der Knickpunkt (631) ist vor einem hinteren Ende Scheinwerfers (21) angeordnet, wie in einer Draufsicht des Fahrzeugs gezeigt.

11. Ein Motorrad gemäß irgendeinem der Ansprüche 1 bis 10, **gekennzeichnet durch** einen linken Blinker (31), der einen linken Schaftabschnitt (311) beinhaltet, angebracht an dem Lagerungselement (71), und einen linken Leuchtungsabschnitt (312), gelagert **durch** den linken Schaftabschnitt (311), und einen rechten Blinker (32), der einen rechten Schaftabschnitt (321) beinhaltet, angebracht an dem Lagerungselement (71) und einen rechten Leuchtabschnitt (322), gelagert **durch** den rechten Schaftabschnitt (321);
eine linke Seiten-Abdeckung (23), angeordnet an der linken Querseite der Scheinwerfer-Abdeckung (22), und eine rechte Seiten-Abdeckung (24) angeordnet an der rechten Querseite der Scheinwerfer-Abdeckung (22); wobei die vordere Kante (51) der linken oder rechten Seiten-Abdeckung (23, 24), wie in der jeweiligen Seitenansicht von dem Fahrzeug gezeigt, hinter der vorderen Kante (43) der Scheinwerfer-Abdeckung (22) angeordnet ist;
der linke und rechte Blinker (31, 32) sind oberhalb der Scheinwerferleuchte (211) und unterhalb des oberen Ende des Scheinwerfers (21) positioniert;
die linken und rechten Seiten-Abdeckungen (23, 24) beinhalten einen oberen Flächenabschnitt (61), positioniert, um zumindest einen Abschnitt von dem linken und rechten Schaftabschnitten (311, 312) der linken und rechten Blinker (31, 32) von oben und von vorne abzudecken.

## Revendications

1. Motocyclette comprenant :
un tube de tête (11) agencé de manière à être incliné vers l'avant et vers le bas ;
une fourche avant (14) supportée de manière rotative par le tube de tête (11) ;
un élément de support (71) supporté par la fourche avant (14) ;
un phare (21) comprenant une ampoule de phare (211), le phare (21) étant supporté par l'élément de support (71) ;
au moins un clignotant (31, 32) comprenant une partie de pied (311, 321) attachée à l'élément de support (71), et une partie d'éclairage (312, 322) supportée par la partie de pied (311, 321) ;
un compteur (18) supporté par l'élément de support (71), le compteur (18) étant agencé au-dessus du phare (21) ;
un carénage de compteur (19) agencé devant le compteur (18) ;
un carénage de phare (22) agencé sur un côté latéral du phare (21) ; et
au moins un carénage latéral (23, 24) agencé sur le côté latéral du carénage de phare (22) ;
dans laquelle
le clignotant (31, 32) est agencé au-dessus de l'ampoule de phare (211) et sous une extrémité supérieure du phare (21) ;
le carénage latéral (23, 24) comprend une partie de surface supérieure (61) agencée de manière à recouvrir au moins une partie de la partie de pied (311, 321) du clignotant (31, 32) depuis le dessus et depuis l'avant ;
la partie de surface supérieure (61) s'étend depuis une position sous le clignotant (31, 32) jusqu'à une position au-dessus du clignotant (31, 32) en vue de côté du véhicule ;
la partie de surface supérieure (61) s'étend depuis une position en avant du clignotant (31, 32) jusqu'à une position en arrière du clignotant (31, 32) en vue de côté du véhicule,
**caractérisée en ce que** le carénage latéral (23, 24) est un élément séparé du carénage de phare (22) et attaché à une surface latérale de carénage (25, 26) du carénage de phare (22), et un bord avant (51) du carénage latéral (23, 24) en vue de côté du véhicule est agencé en arrière d'un bord avant (43) du carénage de phare (22).

2. Motocyclette selon la revendication 1, **caractérisée en ce qu'**au moins une partie de la partie de pied (311, 321) chevauche la partie de surface supérieure (61) en vue de face du véhicule.

3. Motocyclette selon la revendication 1 ou 2, **caractérisée**
**en ce qu'**une partie arrière du carénage latéral (23, 24) comprend une partie supérieure (55) et une partie inférieure (56) agencée sous la partie supérieure (55) et éloignée de la partie supérieure (55) ; et
le clignotant (31, 32) est agencé entre la partie supérieure (55) et la partie inférieure (56).

4. Motocyclette selon la revendication 3, **caractérisée en ce qu'**une extrémité arrière de la partie supérieure (55) est située en arrière du clignotant (31, 32).

5. Motocyclette selon la revendication 3 ou 4, **caractérisée en ce qu'**une extrémité arrière (561) de la partie inférieure (56) est située en arrière du clignotant (31, 32).

6. Motocyclette selon l'une quelconque des revendications 1 à 5, **caractérisée**
**en ce que** le carénage latéral (23, 24) comprend une partie de surface inférieure (62) agencée de manière à recouvrir le clignotant (31, 32) depuis le bas ; et
la partie de surface inférieure (62) s'étend depuis une position en avant du clignotant (31, 32) jusqu'à une position en arrière du clignotant (31, 32) en vue de côté du véhicule.

7. Motocyclette selon l'une quelconque des revendications 1 à 6, **caractérisée en ce qu'**une extrémité avant (611) de la partie de surface supérieure (61) du carénage latéral (23, 24) est située en avant d'une extrémité avant (191) du carénage de compteur (19) en vue de côté du véhicule.

8. Motocyclette selon l'une quelconque des revendications 1 à 7, **caractérisée en ce qu'**une extrémité arrière (612) de la partie de surface supérieure (61) du carénage latéral (23, 24) est située en arrière d'une extrémité arrière (192) du carénage de compteur (19) en vue de côté du véhicule.

9. Motocyclette selon l'une quelconque des revendications 1 à 8, **caractérisée en ce que** la partie de surface supérieure (61) du carénage latéral (23, 24) présente une forme doucement incurvée qui traverse d'une position en avant du clignotant (31, 32) jusqu'à une position en arrière du clignotant (31, 32) en vue de côté du véhicule.

10. Motocyclette selon l'une quelconque des revendications 1 à 9, **caractérisée**
**en ce qu'**un bord du côté latéral externe (63) de la partie de surface supérieure (61) du carénage latéral (23, 24) présente une forme courbe avec un point d'inflexion (631) situé entre le phare (21) et le clignotant (31, 32) en direction de la largeur du véhicule en vue du dessus du véhicule ; et
le point d'inflexion (631) est situé en avant d'une extrémité arrière du phare (21) en vue du dessus du véhicule.

11. Motocyclette selon l'une quelconque des revendications 1 à 10, **caractérisée par**
un clignotant gauche (31) comprenant une partie de pied gauche (311) attachée à l'élément de support (71), et une partie d'éclairage gauche (312) supportée par la partie de pied gauche (311), et un clignotant droit (32) comprenant une partie de pied droite (321) attachée à l'élément de support (71), et une partie d'éclairage droite (322) supportée par la partie de pied droite (321) ;
un carénage latéral gauche (23) agencé sur le côté latéral gauche du carénage de phare (22), et un carénage latéral droit (24) agencé sur le côté latéral droit du carénage de phare (22) ; dans laquelle le bord avant (51) du carénage latéral gauche ou droit (23, 24) en vue de côté du véhicule respective est agencé en arrière du bord avant (43) du carénage de phare (22) ;
les clignotants gauche et droit (31, 32) sont agencés au-dessus de l'ampoule de phare (211) et sous une extrémité supérieure du phare (21) ;
les carénages latéraux gauche et droit (23, 24) comprennent chacun une partie de surface supérieure (61) agencée de manière à recouvrir au moins une partie des parties de pied gauche et droite (311, 321) des clignotants gauche et droit (31, 32) depuis le dessus et depuis l'avant.
